# EUROPEAN PATENT SPECIFICATION

(11) **EP 1 777 149 B1**
(45) Date of publication and mention of the grant of the patent: **21.04.2010**
(21) Application number: 06022150.4
(22) Date of filing: 23.10.2006
(51) Int. Cl.: B62J 35/00

(54) **Straddle-type vehicle**
Grätschsitz-Fahrzeug
Véhicule du type monté a califourchon

(30) Priority: 24.10.2005 JP 2005309141
(43) Date of publication of application: 25.04.2007
(73) Proprietor: Yamaha Hatsudoki Kabushiki Kaisha, Iwata-shi, Shizuoka 438-8501 (JP)
(72) Inventor: Iwasaki, Yusuke, Iwata-shi Shizuoka-ken 438-8501 (JP)
(74) Representative: Grünecker, Kinkeldey, Stockmair & Schwanhäusser Anwaltssozietät

(56) References cited:
- WO-A-2004/072469
- JP-A- 2004 182 018
- JP-A- 2005 291 164
- US-A- 4 871 041

## Description

The present invention relates to a straddle-type vehicle with a fuel-tank assembly according to the preamble of claim 1.

There has been a motorcycle in which part of a seat is disposed above a rear wheel and a fuel tank having a vertically erect fuel pump therein is disposed between the seat and the rear wheel, as disclosed in Patent Document 1.
Patent Document 1: JP-A-2004-182018

However, since the related art has a structure in which the fuel pump is disposed erectly in the vertical direction in the fuel tank, it has limits to reducing the vertical length of the fuel tank. Therefore, in order to reduce the height from the supporting surface of the rear wheel to the top face of the seat to a specified threshold or below determined to meat requirements, it has been necessary for the prior art to reduce the thickness of the seat or the suspension stroke of the rear wheel. This has therefore impaired a comfortable ride of motorcycles.

In document JP 2005-291164 A, a fuel-tank assembly has a fuel filter for a vehicular engine disposed in a fuel tank which is connected with a suction side of the fuel pump through a flexible fuel hose, wherein said filter has a fixing means used for fixing itself to an inner wall face of the fuel tank.

Document WO 2004/072469 A1 discloses a fuel-feeding device for a two-wheeled motor vehicle, wherein a fuel tank is mounted on a component of the vehicle body frame which extends in the forward-backward direction of the vehicle. A fuel pump is provided at a bottom center portion of the fuel tank such that the axis of the pump is oriented in the forward-backward direction of the vehicle, and a fuel filter is provided at a bottom side portion that is a step below the level of the fuel pump.

In document US 4,871,041 A, a fuel tank of a motorcycle or other similar vehicle contains an immersible fuel pump unit arranged to effectively pass fuel from the fuel tank regardless of reduced levels of fuel therein, wherein the fuel pump unit and other elements of the fuel supply system are organized to lower the center of gravity of the vehicle.

The invention is made in view of the above problems. Accordingly, it is an object of the invention to provide a straddle-type vehicle with a fuel-tank assembly, which includes a fuel tank and a fuel pump unit and which can be disposed in the space between the rear wheel and the seat without impairment the comfortable ride of the straddle-type vehicle.

Such an object is achieved by a straddle-type vehicle according to claim 1.

Preferably, the body of the fuel pump unit is provided for generating power for taking out the fuel stored inside the fuel tank.

Further, preferably the fuel pump unit further includes a discharge section for discharging fuel to the outside of the fuel tank, the discharge section being located at the upper part of the vehicle and at the upper end of the body and being connected to the upper end of the body.

Still further, preferably the inclined part of the bottom is disposed above the front of the rear wheel with respect to a rotation shaft thereof, and is inclined to the lower front.

Yet further, preferably the seat is disposed on a first load receiving section and a second load receiving section disposed apart from each other in the front-back direction to receive a load on the seat.

Preferably, the discharge section is disposed between the first load receiving section and the second load receiving section.

Further, preferably the seat includes a first seat portion for a first rider and a second seat portion for a second rider on the back of the first rider, and wherein the discharge section is disposed between the first seat portion and the second seat portion.

According to a another preferred embodiment, the first load receiving section is disposed under the first seat portion to receive a load on the first seat portion and the second load receiving section disposed under the second seat portion to receive a load on the second seat portion, and wherein the discharge section is disposed between the first load receiving section and the second load receiving section.

Preferably, at least part of the inclined part of the bottom is shaped like a saddle that straddles the rear wheel in the width direction.

Further, preferably the bottom further includes an extending part extending in a curve from the lower end of the inclined part into the lowest position of the bottom, and wherein the fuel pump unit includes an intake section connected to the body and sucking the fuel, at least part of the intake section being disposed on the extending part.

In the following, the present invention is explained in greater detail with respect to several embodiments thereof in conjunction with the accompanying drawings, wherein:
- Fig. 1: is a left side view of an example of a motorcycle according to an embodiment,
- Fig. 2: is an enlarged left side view of the rear part of the motorcycle according to the embodiment,
- Fig. 3: is a plan view of the rear part of the motorcycle according to the embodiment,
- Fig. 4: is a perspective view of a fuel tank assembly mounted to the body of the motorcycle according to the embodiment,
- Fig. 5: is a perspective view of the vehicle body in Fig. 4 with a tank cover,
- Fig. 6: is a left side view of the fuel-tank assembly according to the embodiment,

- Fig. 7: is a plan view of the fuel tank according to the embodiment,
- Fig. 8: is a left side view of the fuel tank according to the embodiment,
- Fig. 9: is a cross-sectional view of the bottom of the fuel tank taken along line A-A of Fig. 8,
- Fig. 10: is a cross-sectional view of the bottom of the fuel tank taken along line B-B of Fig. 8,
- Fig. 11: is a left side view of a fuel pump unit according to the embodiment,
- Fig. 12: is a back view of the fuel pump unit according to the embodiment,
- Fig. 13: is a perspective view of the vehicle body of Fig. 4 with a protective member,
- Fig. 14: is a perspective view of the vehicle body of Fig. 5 with the protective member,
- Fig. 15: is a plan view of the protective member according to the embodiment,
- Fig. 16: is a left side view of the protective member according to the embodiment,
- Fig. 17: is a cross-sectional view of the protective member taken along line C-C of Fig. 15,
- Fig. 18: is a cross-sectional view of the protective member taken along line D-D of Fig. 16,
- Fig. 19: is a cross-sectional view of the protective member taken along line E-E of Fig. 16,
- Fig. 20: is a perspective view of a battery case according to the embodiment, and
- Fig. 21: is a perspective view of the battery case shown in Fig. 20 without an upper cover.

### Description of Reference Numerals:

1: motorcycle, 2: front wheel, 3: rear wheel, 4: rear fender, 5: rear arm, 6: pivot, 10: body frame, 11: head pipe, 12: main frame, 13: backstay, 14: seat rail, 15: rear-arm bracket, 20: seat, 21: first seat portion, 22: second seat portion, 30: engine, 31: cylinder, 32: injector, 33: throttle body, 34: muffler, 35: crankcase, 40: fuel tank, 41: bottom, 42: inclined part, 43: extending part, 44: upper surface, 45: pump mounting section, 46: fuel supply port, 47: protrusion, 48: collar, 50: fuel pump unit, 51: body, 52: discharge section, 53: intake section, 54: flange, 55: fuel gauge, 60: tank cover, 70: protective member, 71: base, 72: storage section, 76: pump cover, 80: battery case, 81: casing, 82: upper cover, 83: fixing section, 84: mount, 85: band, 90: front load receiving section, 91: rear load receiving section, 92: front support section, 93: rear support section, 100: body cover, 200: fuel-tank assembly, 201: fuel hose

A fuel-tank assembly and a straddle-type vehicle having the fuel-tank assembly according to an embodiment are described in detail below with reference to the attached drawings. In this embodiment, the straddle-type vehicle is embodied as a motorcycle.

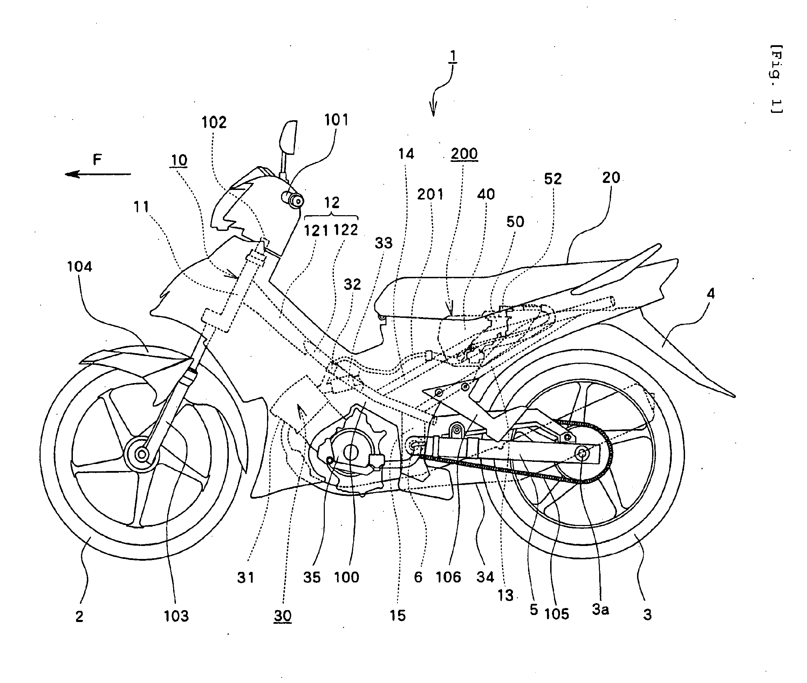

Fig. 1 is a left side view of a motorcycle 1 (hereinafter, referred to as a motorcycle 1) according to the embodiment. In this embodiment, the direction of the travel of the motorcycle 1 (the direction indicated by arrow F in the drawing) is referred to as the "front" of the vehicle, the direction to the right and left of the vehicle is referred to as a "width direction", and the vertical length of the vehicle is referred to as a "height".

The motorcycle 1 includes a body frame 10 that constructs the frame of the vehicle; a front wheel 2 that can be steered by a handle 101; a rear wheel 3 vertically movably supported by rear arms 5; a seat 20 for riders; a fuel jet engine 30; and a fuel tank 40 for storing fuel.

The front end of the body frame 10 is a head pipe 11 extending to the lower front in a slanting direction. The head pipe 11 has a steering shaft 102 connected at the upper end to the handle 101 rotatable passed through. The front wheel 2 is rotatably supported at the lower end of a pair of right and left front forks 103 extending downward from the steering shaft 102. A front fender 104 that covers the upper surface of the front wheel 2 is disposed above the front wheel 2.

The body frame 10 includes a main frame 12 composed of a first main frame 121 connected at the front end to the head pipe 11 and extending above a cylinder 31 of the engine 30 and a pair of right and left second main frames 122 extending from the rear end of the first main frame 121 to the lower rear in a slanting direction between the front wheel 2 and the rear wheel 3.

The body frame 10 has a pair of right and left rear-arm brackets 15 whose upper ends are connected to the rear ends of the pair of right and left second main frames 122, respectively, and extending downward from the rear ends of the second main frames 122. The pair of right and left rear arms 5 extends in the front-back direction and rotatably supports the rear wheel 3 at the rear ends. The front ends of the rear arms 5 are rotatably supported outside the pair of right and left rear-arm brackets 15 in the width direction by a pivot 6. As a result, the pair of right and left rear arms 5 supports the rear wheel 3 vertically movably at the rear ends. A rear fender 4 is disposed above the rear wheel 3, the rear fender 4 being curved along the shape of the rear wheel 3 in the width direction and front-back direction.

The body frame 10 has a rear frame composed of a pair of right and left backstays 13 and a pair of right and left seat rails 14. The backstays 13 are connected at the front ends to the rear ends of the second main frames 122 and extend to the upper rear in a slanting direction above the pivot 6 and the rear arms 5. The seat rails 14 are connected at the front ends to part of the second main frames 122 and extend obliquely to the upper rear above the backstays 13 to support the seat 20. The backstays 13 and the seat rails 14 extend between the seat 20 and the rear wheel 3.

The seat 20 is a tandem seat in which two riders can be seated on the front and the rear. The center of the seat 20 in the front-back direction is disposed above the fuel tank 40, and the rear part is disposed above the rear wheel 3.

The fuel tank 40 is disposed under the seat 20. The rear part of the fuel tank 40 is disposed above the front of the rear wheel 3 with respect to the rotation shaft 3a of the rear wheel 3. The fuel tank 40 accommodates part of a fuel pump unit 50 for supplying the fuel in the fuel tank 40 to the engine 30. That is, the motorcycle 1 has a fuel-tank assembly 200 having the fuel tank 40 and the fuel pump unit 50 under the seat 20.

The fuel pump unit 50 has a discharge section 52 for discharging the fuel in the fuel tank 40 out of the fuel tank 40. The discharge section 52 is disposed on the fuel tank 40. The fuel discharged from the discharge section 52 is supplied to the engine 30 through a fuel hose 201.

The engine 30 is disposed forward of the pivot 6 and below the second main frames 122 between the front wheel 2 and the rear wheel 3. The engine 30 is a single-cylinder four-cycle engine, which includes a cylinder 31 that accommodates a piston, a crank (not shown) that accommodates a crankshaft, and a clutch (not shown) that accommodates a clutch mechanism. The left side of the crank in the width direction and the right side of the clutch in the width direction are covered with a crankcase 35 and a clutch cover (not shown), respectively. The front ends of the pair of right and left rear arms 5 are supported by the pair of right and left rear-arm brackets 15 between the crankcase 35 and the rear wheel 3 and between the clutch cover (not shown) and the rear wheel 3, respectively.

The cylinder 31 extends from the crank to the upper front. The cylinder 31 is connected to an injector 32 that injects the fuel sent from the fuel pump unit 50 through the fuel hose 201 into the cylinder 31 and a throttle body 33 that supplies air taken from an air cleaner (not shown) and mixed with the fuel. The cylinder 31 is also connected to a muffler 34, which is disposed on the right side of the vehicle and extending to the rear, through an exhaust pipe.

The injector 32 is electronically controlled to inject fuel into the cylinder 31 according to the throttle opening degree of the throttle body 33. The engine 30 bums the fuel supplied from the injector 32 to generate a driving force. The driving force is transmitted to the rear wheel 3 via a chain 105 disposed on the left side of the vehicle. Thus, the rear wheel 3 is rotated to drive the motorcycle 1.

The motorcycle 1 further includes a body cover 100 that covers the left side of the body except the crankcase 35, the part between the seat 20 and the rear wheel 3, and so on. The body cover 100 covers most of the body frame 10, the cylinder 31 of the engine 30, the injector 32, the throttle body 33, the fuel hose 201, the fuel-tank assembly 200, and so on.

The motorcycle 1 further includes a pair of right and left rear footrest brackets 106 fixed to the pair of right and left backstays 13, respectively. In other words, a pair of right and left brackets (not shown) is fixed to the pair of right and left backstays 13 behind the crankcase 35 and above the rear arms 5. The upper ends of the pair of right and left rear footrest brackets 106 are fixed to the pair of right and left brackets, respectively. The pair of right and left rear footrest brackets 106 extends while being inclined from the upper ends to the lower rear, the lower ends of which are disposed outside the pair of right and left rear arms 5 in the width direction.

The motorcycle 1 further includes a stand (not shown), which can support the vehicle body at an angle, on the left side of the body. The motorcycle 1 also has an electric system including a generator and electric wiring for power supply mainly on the right side of the body, and a fuel-supply system including the fuel pump unit 50 and the fuel hose 201 mainly on the left side of the body.

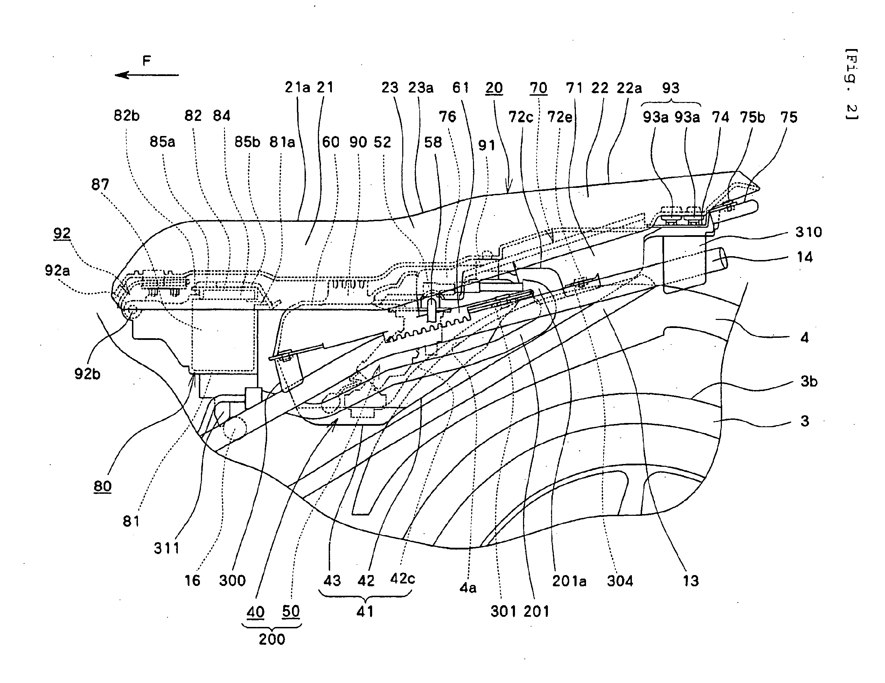

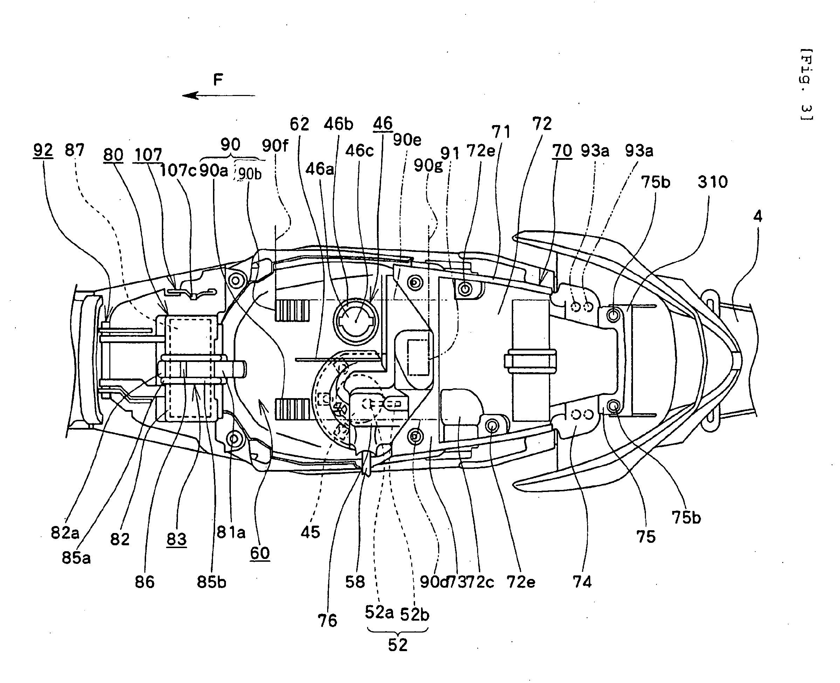

Fig. 2 is a left side view of the rear part of the motorcycle 1 with the body cover 100 removed. Fig. 3 is a plan view of the rear part of the motorcycle 1 with the seat 20 removed.

The motorcycle 1 includes, below the seat 20, a battery case 80 that accommodates a battery 87, the fuel-tank assembly 200 having the fuel tank 40 and the fuel pump unit 50, a tank cover 60 that covers part of the upper part of the fuel-tank assembly 200, and a protective member 70 having a pump cover 76 that protects the discharge section 52 of the fuel pump unit 50 disposed on the fuel tank 40.

The substantially front half of the seat 20 is a first seat portion 21 for a first rider, and the substantially rear half of the seat 20 is a second seat portion 22 for a second rider behind the first rider seated in the first seat portion 21. The upper surface 21 a of the first seat portion 21 is substantially horizontal in the front-back direction, while the upper surface 22a of the second seat portion 22 is in the position higher than the upper surface 21 a of the first seat portion 21 and inclined to the upper rear at a substantially constant incline. The first seat portion 21 is disposed forward relative to the rear wheel 3, while the second seat portion 22 is disposed above the rear wheel 3 and the rear fender 4.

The upper surface 23a of the intermediate part 23 of the seat 20, which connects the first seat portion 21 and the second seat portion 22, is inclined to the upper rear at a substantially constant incline larger than that of the upper surface 22a of the second seat portion 22, and extends from the rear end of the upper surface 21 a of the first seat portion 21 to the front end of the upper surface 22a of the second seat portion 22. The intermediate part 23 is disposed above the rear wheel 3 and the rear fender 4.

The seat 20 is mounted on a front load receiving section 90 disposed under the rear part of the first seat portion 21 and a rear load receiving section 91 disposed under the front part of the second seat portion 22. The front load receiving section 90 has a pair of left-front load receiving section 90a and right-front load receiving section 90b disposed with a spacing on the left and right sides in the width direction. The left-front load receiving section 90a and the right-front load receiving section 90b are disposed at the same position in the front-back-direction. The rear load receiving section 91 is disposed near the center of the width behind the left-front load receiving section 90a and the right-front load receiving section 90b.

The left-front load receiving section 90a, the right-front load receiving section 90b, and the rear load receiving section 91 are rubber dampers for absorbing an impact on the seat 20. The left-front load receiving section 90a and the right-front load receiving section 90b project upward from the fuel tank 40 side, while the rear load receiving section 91 projects downward from the seat 20 side. Specifically, the left-front load receiving section 90a and the right-front load receiving section 90b are integrated with the tank cover 60 that covers the fuel tank 40 and project upward from the tank cover 60, while the rear load receiving section 91 projects from the lower surface of the seat 20.

For example, when the seat 20 is warped downward by load, the left-front load receiving section 90a, the right-front load receiving section 90b, and the rear load receiving section 91 are compressed between the warped seat 20 and the fuel tank 40 to be elastically deformed so as to decrease in vertical length slightly, thereby receiving the load on the seat 20. In other words, the left-front load receiving section 90a and the right-front load receiving section 90b mainly receive the load on the left and right side in the width direction, of a load on the first seat portion 21, while the rear load receiving section 91 mainly receives a load on the second seat portion 22.

Specifically, for example, when the driver of the motorcycle 1 is seated in the first seat portion 21, and a passenger is seated in the second seat portion 22, the front load receiving section 90 and the rear load receiving section 91 mainly receive a load by the driver and a load by the passenger. That is, the front load receiving section 90 and the rear load receiving section 91 receive the loads of the driver and the passenger, respectively. Thus, the load on the seat 20 is received mainly by the three sections, the left-front load receiving section 90a, the right-front load receiving section 90b, and the rear load receiving section 91. Between the lower surface of the intermediate part 23 and the fuel tank 40, a space sandwiched between the front load receiving section 90 and the rear load receiving section 91 is formed, into which the discharge section 52 projects, as will be described below.

Both the front load receiving section 90 and the rear load receiving section 91 are disposed on the fuel tank 40. That is, the left-front load receiving section 90a and the right-front load receiving section 90b are disposed on the front part of the surface of the fuel tank 40 facing the seat 20, while the rear load receiving section 91 is disposed on the rear part of the surface.

The motorcycle 1 further includes a front support section 92 disposed forward with respect to the fuel tank 40 and under the front end of the seat 20 to support the front end from below and a rear support section 93 disposed under the rear end of the seat 20 to support the rear end from below.

The front support section 92 has a hinge 92a that rotatably supports the front end of the seat 20. The hinge 92a has a hinge shaft 92b extending in the width direction. The seat 20 can be opened up or closed down by the turn of the front end about the hinge shaft 92b of the front support section 92.

The rear support section 93 has four projections 93a projecting downward from the lower surface of the rear end of the seat 20. The four projections 93a project by two in the front and rear at the right and left rear ends of the seat 20 in the width direction, and the lower ends are in contact with part of the protective member 70 to thereby support the rear end of the seat 20.

Thus, the seat 20 is constructed across the front support section 92, the rear support section 93, the front load receiving section 90, and the rear load receiving section 91. Specifically, the seat 20 is supported at the front end by the front support section 92 and at the rear end by the rear support section 93, while its center of the length, which is prone to be warped by a load, supported from below by the front load receiving section 90 and the rear load receiving section 91. Thus, the first seat portion 21 of the seat 20 is constructed on the front support section 92 and the front load receiving section 90, while the second seat portion 22 of the seat 20 is constructed on the rear load receiving section 91 and the rear support section 93. The distance between the front load receiving section 90 and the rear load receiving section 91 in the front-back direction is smaller than either of the distance between the front load receiving section 90 and the front support section 92 and the distance between the rear load receiving section 91 and the rear support section 93.

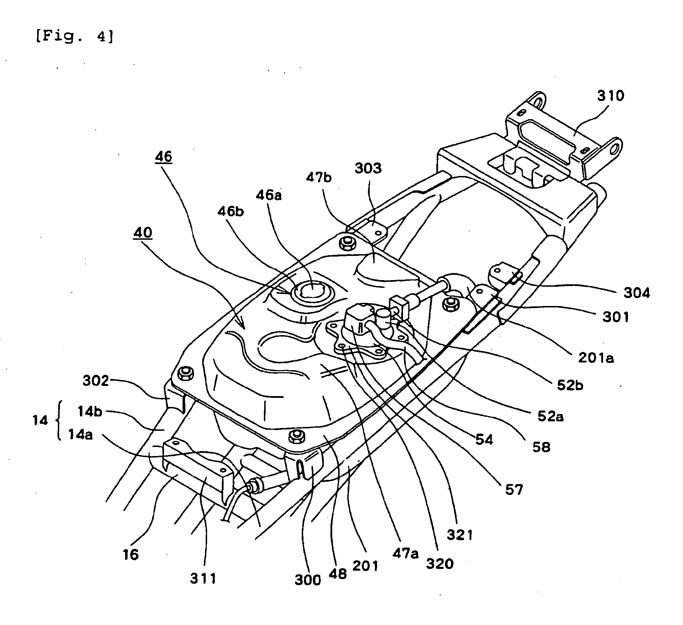

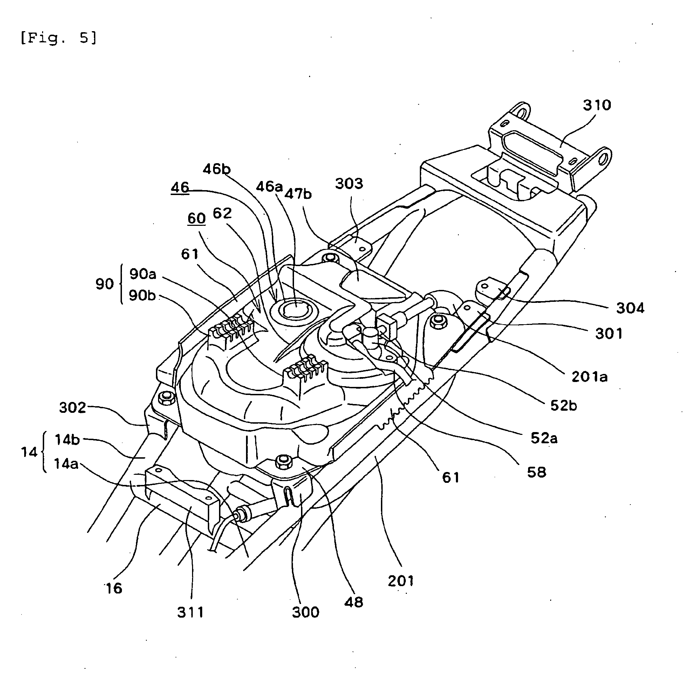

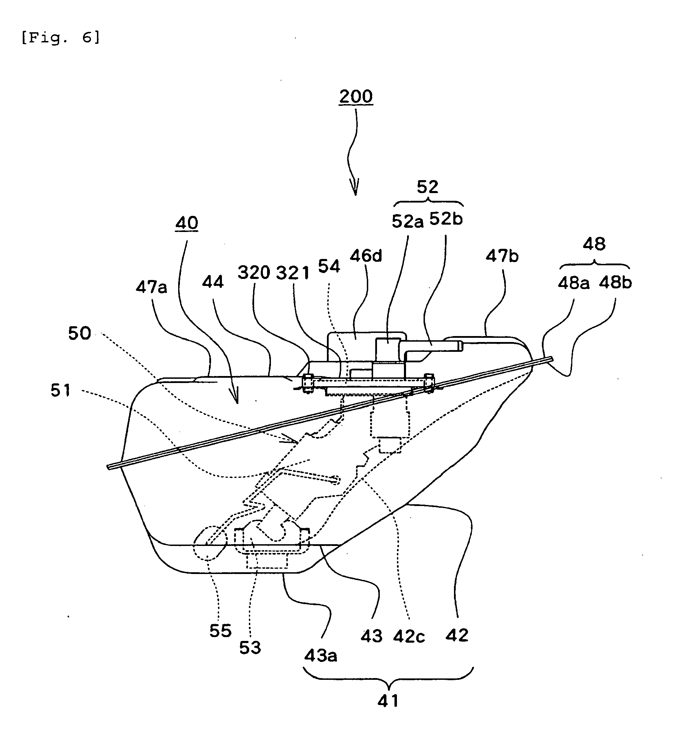

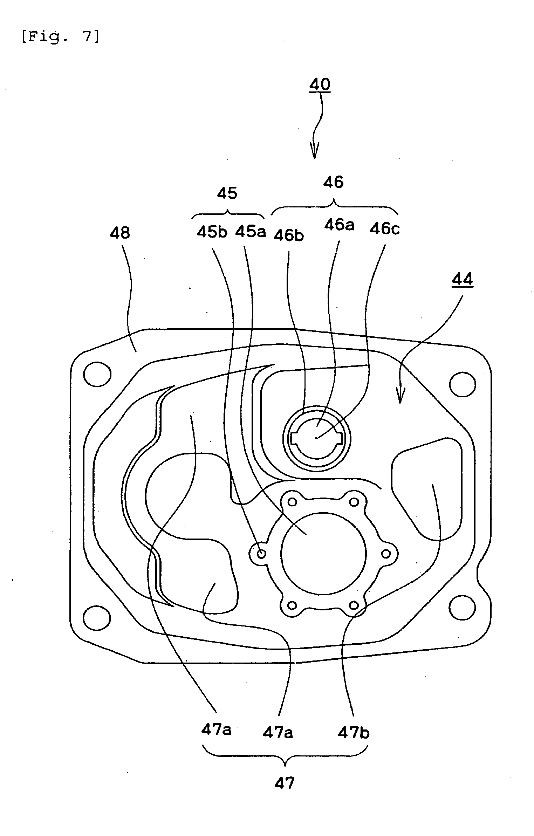

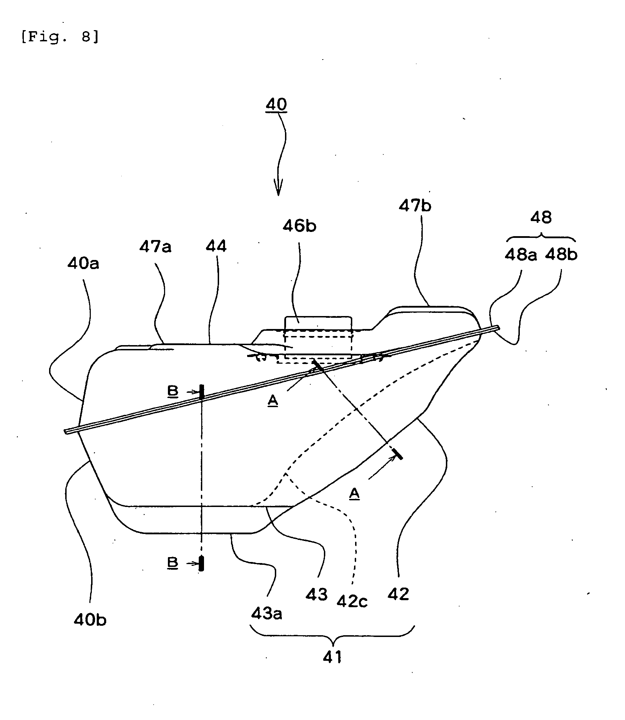

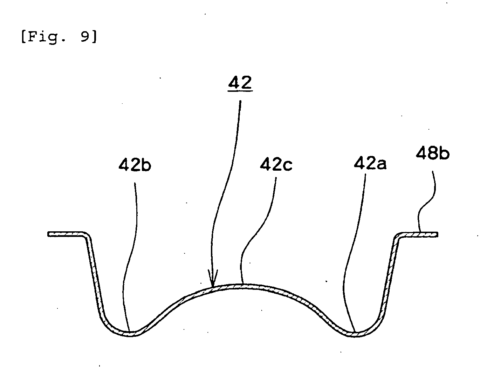

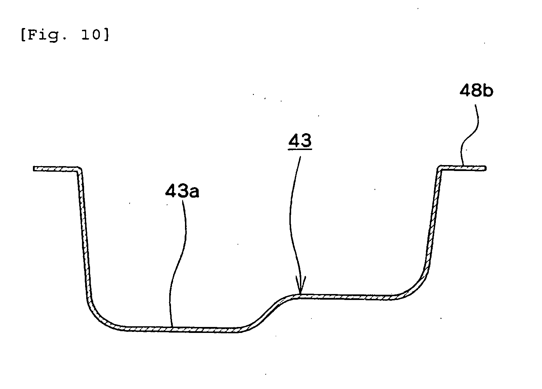

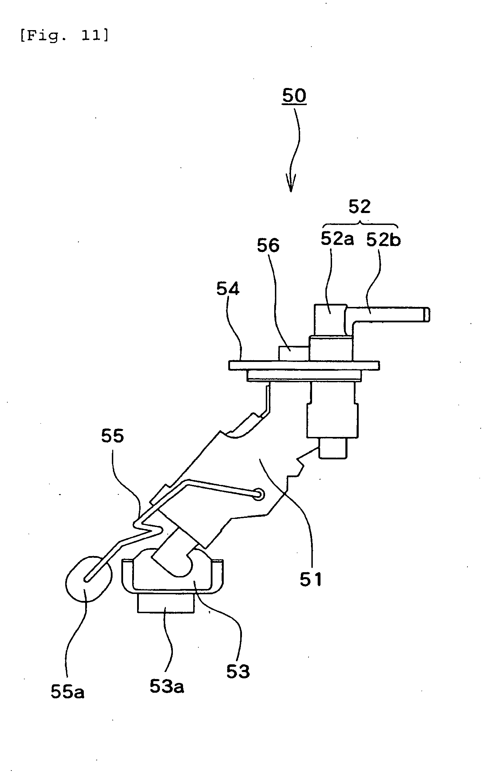

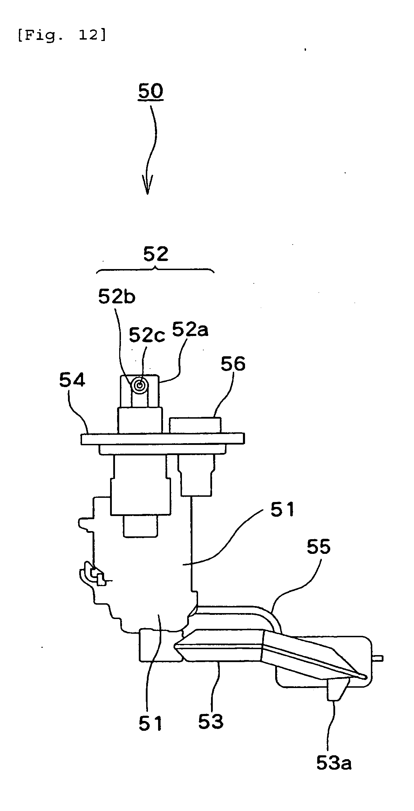

The fuel-tank assembly 200 will now be described in detail. Fig. 4 is a perspective view of the fuel-tank assembly 200 mounted to the body. Fig. 4 shows a state in which the seat 20, the battery case 80, the tank cover 60, the protective member 70, the body cover 100, and so on are removed for the convenience of description. Fig. 5 is a perspective view of the body in Fig. 4, to which the tank cover 60 is disposed. Fig. 6 is a left side view of the fuel-tank assembly 200. Figs. 7 and 8 are a plan view and a left side view of the fuel tank 40, respectively. Figs. 9 and 10 are cross-sectional views of a bottom 41 of the fuel tank 40 taken along line A-A and line B-B of Fig. 8, respectively. Figs. 11 and 12 are a left side view and a back view of the fuel pump unit 50, respectively.

The fuel tank 40 of the fuel-tank assembly 200 has the bottom 41 that is the lower part of its outside wall and an upper surface 44 that is the upper part of the outside wall. The fuel tank 40 also has a plate collar 48 surrounding the outer side. The fuel tank 40 is assembled such that an upper part 40a and a lower part 40b which are formed separately are fixed together by fixing a collar 48a of the upper part 40a and a collar 48b of the lower part 40b to each other. The collar 48 is inclined to the lower front in the front-back direction along a left seat rail 14a and a right seat rail 14b.

The bottom 41 of the fuel tank 40 includes a rear part 42 (hereinafter, referred to as an inclined part 42) extending from the rear end of the upper surface 44 toward the lower front. The inclined part 42 is disposed above the front of the rear wheel 3 and the rear fender 4 with respect to the rotation shaft 3a of the rear wheel 3.

The inclined part 42 is curved in the width direction and the front-back direction so as to cover an upper surface 3b of the rear wheel 3 and an upper surface 4a of the rear fender 4 disposed therebelow (see Fig. 2). In other words, the inclined part 42 is shaped like a saddle that is curved across the rear wheel 3 and the rear fender 4 therebelow in the width direction. As shown in Fig. 9, the width-direction center part 42c of the inclined part 42 rises along the curve in the width direction of the upper surface 3b of the rear wheel 3 and the upper surface 4a of the rear fender 4(see Fig. 2) disposed below the inclined part 42. The inclined part 42 also has a left downward recess 42a and a right downward recess 42b on the left and right ends in the width direction. The inclined part 42 is therefore disposed along the rear-fender upper surface 4a in such a manner that the width-direction center part 42c covers the upper part of the rear-fender upper surface 4a and that the left recess 42a and the right recess 42b sandwich the rear-fender upper surface 4a from the left and right sides in the width direction.

Referring to Fig. 8, the width-direction center part 42c of the inclined part 42 is curved in the front-back direction along the curve of the rear-wheel upper surface 3b and the rear-fender upper surface 4a below the inclined part 42 so as to cover the rear-wheel upper surface 3b and the rear-fender upper surface 4a. The inclined part 42 is thus disposed along the rear-fender upper surface 4a in the front-back direction so as to cover it. In this manner, the inclined part 42 is curved so as to cover the rear-fender upper surface 4a in the width direction and the front-back direction, so that the inclined part 42 can be disposed close to the rear-fender upper surface 4a (see Fig. 2). There is no other component disposed between the inclined part 42 and the rear-fender upper surface 4a facing the inclined part 42.

The bottom 41 of the fuel tank 40 further includes a part 43 (hereinafter, referred to as an extending part 43) whose rear end connects to the lower end of the inclined part 42 and extends substantially horizontally forward from the lower end of the inclined part 42. The extending part 43 is disposed at the lowest position of the bottom 41, forward with respect to the rear wheel 3 and below the rear part of the first seat portion 21 of the seat 20.

Of the extending part 43, the right part in the width direction is recessed downward from the left to form a reservoir 43a at the lowest of the extending part 43. Accordingly, for example, when fuel is stored in the fuel tank 40, the height from the reservoir 43a to the fuel level thereabove is larger than the height from the other part of the bottom 41 (including the part of the extending part 43 except the reservoir 43a and the inclined part 42) to the fuel level thereabove, so that the fuel left in the fuel tank 40 is stored on the reservoir 43a.

Thus, the fuel tank 40 has a high part above the extending part 43 to ensure sufficient capacity and a low part above the inclined part 42 which can be disposed in the limited space above the rear wheel 3 and under the seat 20.

The fuel tank 40 also has a front protrusion 47a and a rear protrusion 47b of the upper surface 44 on which the front load receiving section 90 and the rear load receiving section 91 are disposed and which rise from the peripheral surface to the side facing the seat 20, respectively. Specifically, the front protrusion 47a is the part of the front of the upper surface 44 which rises in the width direction from the part in contact with the right-front load receiving section 90b across the part in contact with the left-front load receiving section 90a. The rear protrusion 47b is the part of the rear of the upper surface 44 which rises in the center of the width in contact with the lower end of the rear load receiving section 91.

The front protrusion 47a and the rear protrusion 47b rise to have the highest rigidity of the upper surface 44. The front protrusion 47a receives a load on the first seat portion 21 through the front load receiving section 90, while the rear protrusion 47b receives a load on the second seat portion 22 through the rear load receiving section 91. The upper surfaces of the front protrusion 47a and the rear protrusion 47b are substantially flat to allow close contact with the front load receiving section 90 and the rear load receiving section 91, respectively. The upper surface of the rear protrusion 47b is located at the highest position of the surface of the fuel tank 40.

The fuel tank 40 has at the upper surface 44 a pump mounting section 45 at which the discharge section 52 of the fuel pump unit 50 is disposed. Of the pump mounting section 45, the part above the left recess 42a of the inclined part 42 (see Fig. 9) has a circular pump-insertion opening 45a through which part of the fuel pump unit 50 is inserted into the fuel tank 40. The discharge section 52 of the fuel pump unit 50 is disposed within the range of the pump-insertion opening 45a. Around the pump-insertion opening 45a is formed a plurality of fixing holes 45b for bolts 320 (see Fig. 6) for fixing part of the fuel pump unit 50 to the upper surface 44.

The fuel tank 40 has a fuel supply port 46 on the upper surface 44, which has a substantially circular fuel injection opening 46a for injecting fuel into the fuel tank 40. The fuel supply port 46 further has a vertically extending cylindrical tube filler 46b passed through the fuel injection opening 46a and fixed to the upper surface 44. The upper end of the tube filler 46b projects upward from the peripheral upper surface 44, while the lower end thereof extends vertically into the fuel tank 40.

The upper surface of the fuel supply port 46 is located higher than the upper surface of the discharge section 52 of the fuel pump unit 50. Specifically, the fuel-tank assembly 200 shown in Fig. 6 is constructed such that the fuel supply port 46 has a cap 46d protruding from the upper surface 44 so as to cover the top of the tube filler 46b. The top face of the cap 46d is located higher than a projection 52a and a nozzle 52b of the discharge section 52. Accordingly, the projection 52a and the nozzle 52b are effectively protected from the deflection of the seat 20 by the fuel supply port 46 having a relatively high rigidity.

The fuel supply port 46 is disposed between the left-front load receiving section 90a and the right-front load receiving section 90b in the width direction. Specifically, referring to Fig. 3, the fuel supply port 46 is disposed such that the center 46c of the fuel injection opening 46a is located between a phantom line 90d drawn from the left end of the left-front load receiving section 90a in the width direction to the rear and a phantom line 90e drawn from the right end of the right-front load receiving section 90b in the width direction to the rear.

The fuel supply port 46 and the pump mounting section 45 are disposed behind the front protrusion 47a and forward of the rear protrusion 47b. Specifically, the fuel supply port 46 and the pump mounting section 45 are disposed behind a phantom line 90f drawn from the front end of the front load receiving section 90 in the width direction and forward of a phantom line 90g drawn from the rear end of the rear load receiving section 91 in the width direction. The fuel supply port 46 and the pump mounting section 45 are arranged side by side in the width direction, behind the right-front load receiving section 90b and the left-front load receiving section 90a, respectively.

The fuel pump unit 50 includes a body 51 for generating power for taking out the fuel in the fuel tank 40; an intake section 53 for taking the fuel in the fuel tank 40 into the body 51 by the power from the body 51, a discharge section 52 for discharging the fuel taken in the body 51 outside the fuel tank 40, and a disc flange 54 fixed to the fuel tank 40, and a fuel gauge 55 for measuring the amount of fuel in the fuel tank 40.

The body 51 has a substantially cylindrical shape extending to the lower front from the lower part of the discharge section 52, and accommodates a motor shaft (not shown) extending longitudinally, an impeller (not shown) rotatable around the motor shaft for sucking fuel from the intake section 53, and a motor (not shown) for generating power to rotate the impeller.

In the fuel-tank assembly 200, the body 51 is disposed on and close to the inclined part 42 in such a manner that the length substantially agrees with the direction of the inclination of the inclined part 42 of the fuel tank 40. The direction of the inclination of the inclined part 42 is, for example, the direction of the tangential line of part of the inclined part 42 to the curve in the front-back direction. Specifically, for example, the body 51 is disposed on the inclined part 42 in such a manner that the longitudinal direction of the motor shaft substantially agrees with the tangential line of the width-direction center part 42c of the inclined part 42 in the front-back direction to the curve. Accordingly, for example, an impact on the longitudinal direction of the motor shaft in the body 51 with the vertical vibration of the body is reduced as compared with that when the body 51 is erected vertically. The length of the inclined part 42 of the fuel tank 40 in the direction of inclination is larger than the length of the body 51 of the fuel pump unit 50.

In the fuel-tank assembly 200, the body 51 of the fuel pump unit 50 is disposed on the lowest portion of the inclined part 42 of the fuel tank 40. Specifically, the body 51 is disposed on the left recess 42a (see Fig. 9) of the inclined part 42. In this case, at least part of the body 51 may be disposed lower than the width-direction center part 42c of the inclined part 42.

Disposing the body 51 which is the longest part in the longitudinal direction in the fuel pump unit 50 with tilt along the inclined part 42 of the fuel tank 40 can reduce the thickness above the inclined part 42 of the fuel-tank assembly 200. This enables the rear part of the fuel-tank assembly 200 to be disposed in the limited space above the rear wheel 3 and under the seat 20.

The intake section 53 of the fuel pump unit 50 has a filter (not shown) therein, for filtering the fuel in the fuel tank 40 to eliminate dusts in the fuel when sucking the fuel into the body 51. The intake section 53 is connected to the lower end of the body 51, and extends downward from the lower end of the body 51, and also extends to the right in the width direction, the end 53b of which is bent obliquely downward.

In the fuel-tank assembly 200, the intake section 53 is disposed on the extending part 43 in such a manner that the end 53a is located above the reservoir 43a of the extending part 43 of the fuel tank 40. The intake section 53 is disposed close to the extending part 43 with a slight distance therefrom.

The discharge section 52 of the fuel pump unit 50 is disposed above the upper end of the body 51. Specifically, of the fuel pump unit 50, the part from the upper end of the body 51 to the discharge section 52 extends upward from the upper end of the body 51 toward the seat 20. The discharge section 52 has the projection 52a projecting from the flange 54 and the cylindrical nozzle 52b extending substantially horizontally from the projection 52a toward the rear. The end of the nozzle 52b has a discharge opening 52c for discharging fuel, to which one end of the fuel hose 201 is connected (see Fig. 2).

The discharge section 52 projects within the range of the pump-insertion opening 45a of the upper surface 44 of the fuel tank 40 facing the seat 20. As a result, the discharge section 52 is located rearward with respect to the first seat portion 21. The discharge section 52 is located below the intermediate part 23, which is between the first seat portion 21 and the second seat portion 22 of the seat 20. Specifically, as shown in Fig. 3, the projection 52a and the nozzle 52b are located behind the phantom line 90f drawn from the rear end of the front load receiving section 90 in the width direction and forward of the phantom line 90g drawn from the front end of the rear load receiving section 91 in the width direction.

As a result, the discharge section 52 is located in the space below the seat 20 and above the fuel tank 40 and between the front load receiving section 90 and the rear load receiving section 91 above the rear wheel 3 and the rear fender 4. Accordingly, for example, even when the driver is seated in the first seat portion 21, and the passenger is seated in the second seat portion 22, the first seat portion 21 is deflected between the front load receiving section 90 and the front support section 92, while the second seat portion 22 is deflected between the rear load receiving section 91 and the rear support section 93, so that the discharge section 52 is effectively protected from the deflection of the seat 20.

The discharge section 52 is disposed between the left-front load receiving section 90a and the right-front load receiving section 90b in the width direction. Specifically, as shown in Fig. 3, the projection 52a and the nozzle 52b of the discharge section 52 are located between the phantom line 90d drawn from the left end of the left-front load receiving section 90a in the width direction to the rear and the phantom line 90e drawn from the right end of the right-front load receiving section 90b in the width direction to the rear. Accordingly, the discharge section 52 is effectively protected from the displacement of the seat 20 due to a load.

The projection 52a and the nozzle 52b of the discharge section 52 and the fuel hose 201 extending from the nozzle 52b to the rear are disposed lower than the upper surface of the rear protrusion 47b of the fuel tank 40. The nozzle 52b and the fuel hose 201 extend to the left of the rear protrusion 47b. The projection 52a, the nozzle 52b, and the fuel hose 201 are disposed higher than the part of the upper surface 44 other than the rear protrusion 47b (including the front protrusion 47a).

The flange 54 of the fuel pump unit 50, on the upper end of the body 51, extends from the lower end of the projection 52a of the discharge section 52 in a disc form to the periphery. The flange 54 has a projecting connector 56 adjacent to the projection 52a, the connector 56 having a terminal (not shown) for supplying power from the generator (not shown) of the motorcycle 1 to the fuel pump unit 50.

The flange 54 is disposed on the pump-insertion opening 45a and pushed from above by a presser 321 against part of the pump mounting section 45 surrounding the pump-insertion opening 45a. The flange 54 is tightened to the pump mounting section 45 together with the presser 321 by the plurality of bolts 320. The connector 56 on the flange 54 is capped with a terminal coupler 57, from which a power supply harness 58 connected to the terminal of the connector 56 extends to the left in the width direction (see Fig. 4). The connector 56 is also disposed between the left-front load receiving section 90a and the right-front load receiving section 90b in the width direction, as is the discharge section 52.

The fuel gauge 55 of the fuel pump unit 50 has a float 55a floatable in the fuel in the fuel tank 40. The fuel gauge 55 measures the fuel level on the basis of the position of the float 55a floating up and down according to the fluid level of the fuel in the fuel tank 40.

The angle defined by the longitudinal direction of the discharge section 52 and the longitudinal direction of the body 51 of the fuel pump unit 50 is fixed. In other words, the discharge section 52 and the body 51 are connected to each other such that the angle formed between the vertical direction of the discharge section 52 and the direction of the inclination of the body 51 is constant.

The fuel-tank assembly 200 is assembled such that the fuel pump unit 50 is inserted from its lower end into the fuel tank 40, and part of the fuel pump unit 50 is fixed to the fuel tank 40. Specifically, the fuel pump unit 50 is inserted from the side of the intake section 53 into the fuel tank 40 through the pump-insertion opening 45a of the fuel tank 40. The intake section 53 and the body 51 inserted into the fuel tank 40 are slid obliquely downward along the inclination of the inclined part 42 located below the pump-insertion opening 45a. Thus, the intake section 53 is disposed on the extending part 43 at the lowest of the bottom 41 of the fuel tank 40, while the body 51 is disposed to extend along the inclination of the inclined part 42. The flange 54 is tightened to part of the pump mounting section 45 surrounding the pump-insertion opening 45a, on the upper end of the body 51 of the fuel pump unit 50 with the bolts 320 to thereby fix the fuel pump unit 50 to the fuel tank 40. As a result, only part of the fuel pump unit 50, the intake section 53 and part of the fuel gauge 55, are disposed on the extending part 43, and the other parts, the body 51, the flange 54, and the discharge section 52, are disposed on the inclined part 42.

The fuel-tank assembly 200 with this structure is fixed to the pair of left and right seat rails 14. Specifically, to the left seat rail 14a are fixed a left front stay 300 and a left rear stay 301 that support the left side of the fuel tank 40 at the front and rear, respectively, while to the right seat rail 14b are fixed a right front stay 302 and a right rear stay 303 at the front and rear, respectively. The collar 48 of the fuel tank 40 is fixed to the four stays, so that the fuel-tank assembly 200 is secured to and between the left seat rail 14a and the right seat rail 14b.

The tank cover 60 is a rubber sheet formed along the shape of the upper surface 44 of the fuel tank 40 so as to cover the upper surface 44. The tank cover 60 covers the top face of most of the part of the fuel-tank assembly 200 disposed above the seat rails 14 except the fuel supply port 46, the rear protrusion 47b, and the rear end of the fuel tank 40, and the discharge section 52 of the fuel pump unit 50. The tank cover 60 has a pair of right and left fins 61 that covers the parts of the left seat rail 14a and the right seat rail 14b which are disposed outside the fuel tank 40 in the width direction. The tank cover 60 prevents the fuel that spilled when put into the fuel tank 40 from flowing below the fuel tank 40. The tank cover 60 has a plate weir 62 extending in the front-back direction so as to separate the fuel supply port 46 of the fuel tank 40 from the discharge section 52 of the fuel pump unit 50. The weir 62 prevents, for example, the fuel that spilled around the fuel supply port 46 of the fuel tank 40 from flowing toward the discharge section 52. As has been described, the part of the tank cover 60 which covers the front protrusion 47a of the fuel tank 40 has the left-front load receiving section 90a and the right-front load receiving section 90b projecting together with the other part to the seat 20.

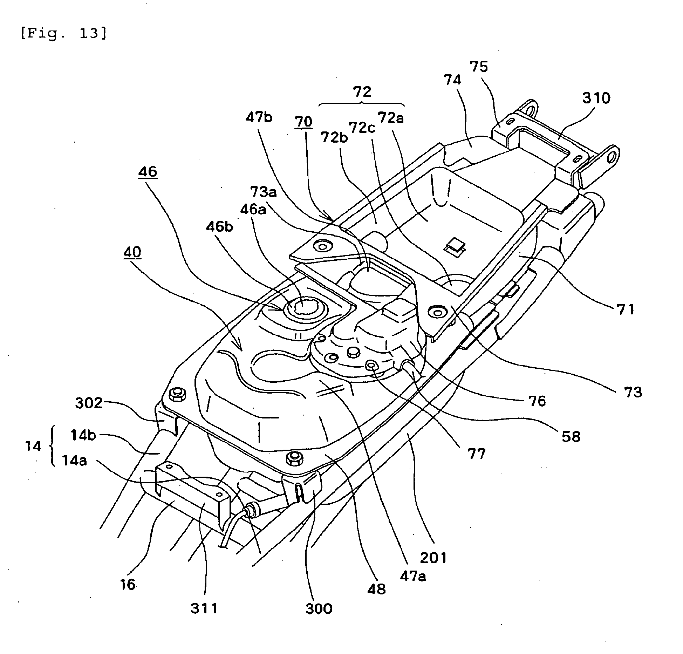

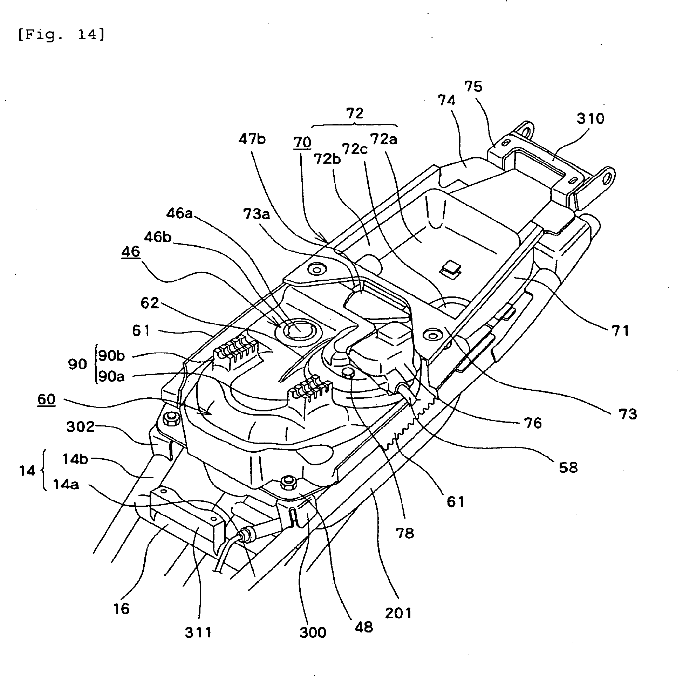

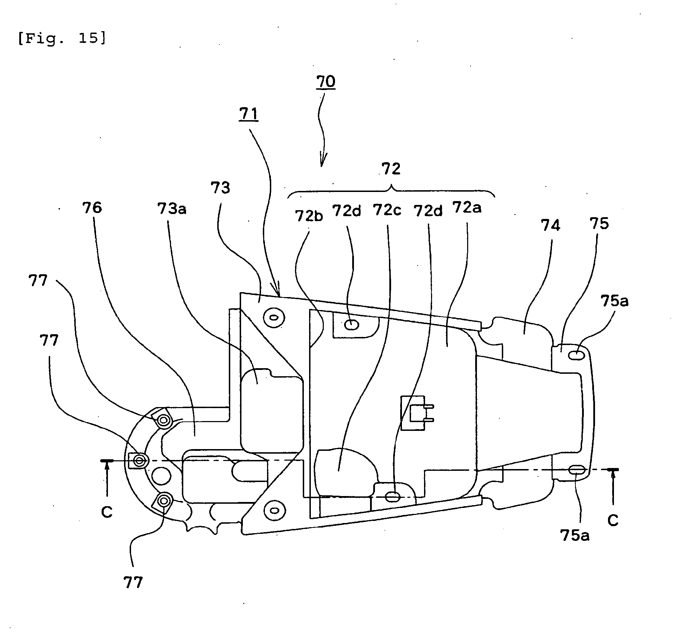

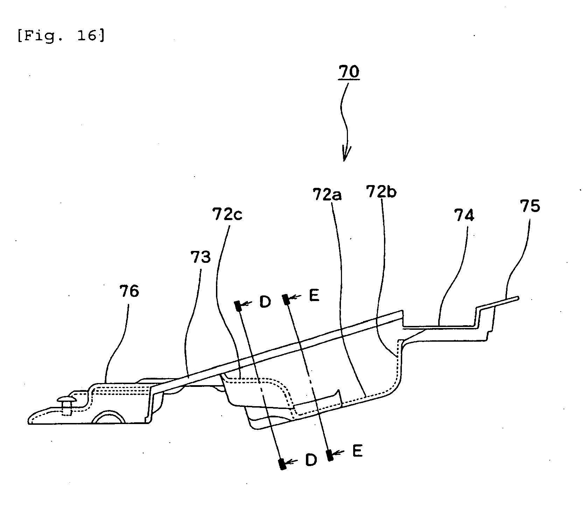

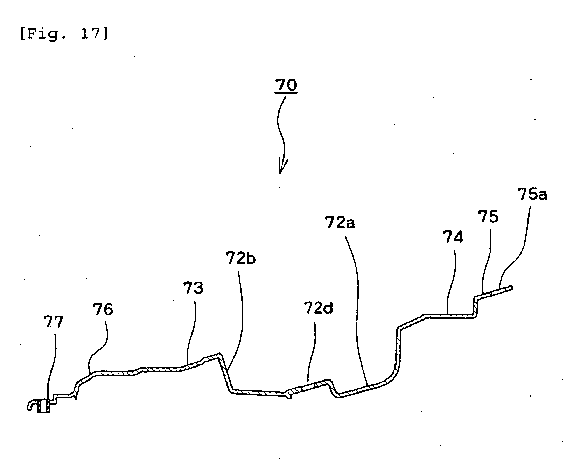

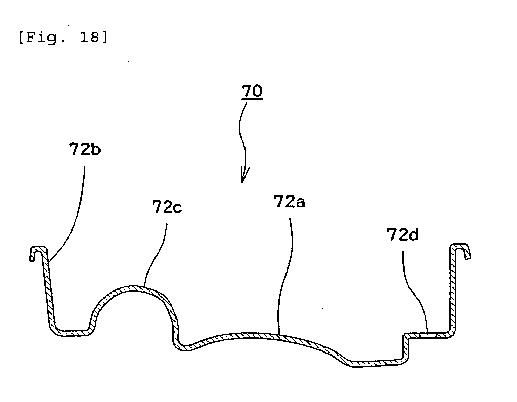

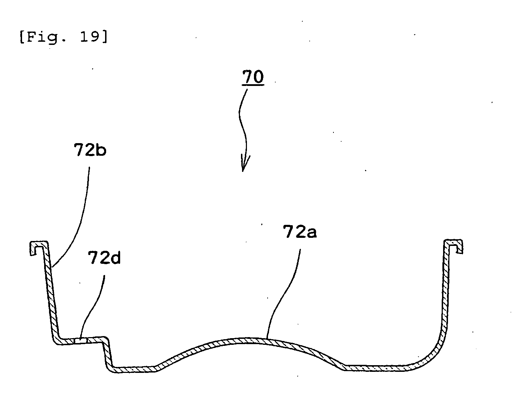

The protective member 70 will next be described in detail. Fig. 13 is a perspective view of the vehicle body of Fig. 4 with the protective member 70; Fig. 14 is a perspective view of the vehicle body of Fig. 5 with the protective member 70; Figs. 15 and 16 are a plan view and a left side view of the protective member 70, respectively; Fig. 17 is a cross-sectional view of the protective member 70 taken along line C-C of Fig. 15; and Figs. 18 and 19 are cross-sectional views of the protective member 70 taken along line D-D and line E-E of Fig. 16, respectively.

The whole protective member 70 is made of resin, and includes a base 71 fixed to the left seat rail 14a and the right seat rail 14b and a pump cover 76 integrated with the base 71 and covering the discharge section 52 on the fuel tank 40.

The base 71 is a storage box having a downwardly recessed storage section 72. The storage section 72 includes an article storage bottom 72a and a storage wall 72b extending upward from the storage bottom 72a so as to surround the storage bottom 72a. The storage bottom 72a is inclined to the lower front along the left seat rail 14a and the right seat rail 14b in the front-back direction. The width of the storage bottom 72a is substantially equal to the distance between the left seat rail 14a and the right seat rail 14b. The storage bottom 72a has a pair of left and right fixing holes 72d for fixing the base 71 to the left seat rail 14a and the right seat rail 14b at the right and left ends in the width direction, respectively.

The base 71 has a rear plate 74 extending from the upper end of the rear of the storage wall 72b toward the rear. As shown in Figs. 2 and 3, the rear plate 74 is in contact with the rear support section 93 from above, the rear support section 93 projecting from the lower surface of the seat 20. The rear plate 74 receives part of a load on the seat 20 via the rear support section 93.

The base 71 further has a rear plate 75 extending from the rear end of the rear plate 74 toward the rear. The width of the rear plate 75 is substantially equal to the distance between the rear end of the left seat rail 14a and the rear end of the right seat rail 14b. The left end and right ends of the rear plate 75 have a pair of left and right fixing holes 75a for fixing the base 71 to the left seat rail 14a and the right seat rail 14b, respectively.

The base 71 is disposed across the left seat rail 14a and the right seat rail 14b in the width direction. The both ends in the width direction are respectively fixed to the left seat rail 14a and the right seat rail 14b. Specifically, as shown in Figs. 4 and 5, the left seat rail 14a fixes to a left rear stay 304 behind the left rear stay 301 on the back of the fuel tank 40, while the right seat rail 14b fixes to a right rear stay 303. The storage bottom 72a of the base 71 is secured at the left and right ends in the width direction to the left rear stay 304 and the right rear stay 303 with two bolts 72e (see Fig. 2) passed through the pair of left and right fixing holes 72d, respectively. Thus, the base 71 is secured to the left seat rail 14a and the right seat rail 14b through the left rear stay 304 and the right rear stay 303, respectively.

At the rear ends of the left seat rail 14a and the right seat rail 14b, a rear-end support member 310 is fixed at both ends across the left seat rail 14a and the right seat rail 14b. The rear plate 75 of the base 71 is fixed at the right and left ends in the width direction to the rear-end support member 310 with two bolts 75b (see Fig. 2) passed through the pair of right and left fixing holes 75a. Thus, the base 71 is fixed to the left seat rail 14a and the right seat rail 14b through the rear-end support member 310. The base 71 is thus disposed across the left seat rail 14a and the right seat rail 14b in the width direction. In this way, the base 71 is disposed close to and behind the fuel tank 40.

The base 71 further has a hose cover 72c which is part of the storage bottom 72a and the storage wall 72b and which extends inside the storage section 72 so as to cover the part 201 a (hereinafter, referred to as a folded part 201 a) of the fuel hose 201 extending toward the back of the fuel tank 40, which is folded back to the front at the rear end of the fuel tank 40. The hose cover 72c projects from the front of the storage wall 72b to the rear so as to follow the folded part 201 a of the fuel hose 201. The folded part 201 a of the fuel hose 201 is disposed outside the hose cover 72c so as to extend along the projection of the hose cover 72c. Since the hose cover 72c for protecting the folded part 201 a of the fuel hose 201 projects into part of the storage space of the storage section 72, the number of components can be decreased, and the motorcycle 1 can be reduced in size in the front-back direction.

The fuel hose 201 is folded forward so as to roll in the rear end of the collar 48 of the fuel tank 40 from above to below, and extends forward along the left side of the fuel tank 40 between the seat rails 14 and the backstays 13. In other words, the fuel hose 201 extends from the discharge section 52 of the fuel-tank assembly 200 to the injector 32 of the engine 30 without sticking out of the pair of right and left seat rails 14 to the exterior in the width direction. This allows the size reduction of the motorcycle 1 in the width direction.

The base 71 also has a front plate 73 extending from the upper end of the front of the storage wall 72b toward the front. The front plate 73 extends to the lower front. The width of the front plate 73 is substantially equal to the distance between the left seat rail 14a and the right seat rail 14b. The front plate 73 has, in the center in the width direction, an opening 73a in which the rear protrusion 47b of the fuel tank 40 adjacent to the front of the base 71 is disposed. Specifically, as shown in Figs. 13 and 14, the rear protrusion 47b of the fuel tank 40 is arranged to be exposed in the opening 73a of the front plate 73, so that the rear load receiving section 91 projecting from the lower surface of the seat 20 is in direct contact with the rear protrusion 47b, as shown in Fig. 2.

The rear end of the pump cover 76 of the protective member 70 connects to the front end of the front plate 73 and extends forward from the front end of the front plate 73 substantially horizontally. The pump cover 76 is formed such that substantially the left half of the front plate 73 in the width direction extends forward. In other words, the pump cover 76 is integrated with the front plate 73 and the storage section 72 which are wider than the width of the pump cover 76. Thus, an impact on the pump cover 76 is efficiently dispersed to the base 71 having the front plate 73 and the storage section 72.

The pump cover 76 has projections and depressions corresponding to the shapes of the projection 52a and the nozzle 52b of the discharge section 52, the fuel hose 201, the terminal coupler 57, the harness 58 disposed on the fuel tank 40 and the bolts 320 fixing the flange 54 to the upper surface 44, and is disposed in the vicinity of the upper side of the components so as to cover them. The pump cover 76 is secured to the tank cover 60 with a screw 78.

A plurality of cylindrical bumpers 77 that can be in contact with the upper end of part of the bolts 320 which fix the flange 54 of the fuel pump unit 50 to the upper surface 44 of the fuel tank 40 is disposed in the position of the pump cover 76 facing the part of the bolts 320. The bumpers 77 are disposed close to above the bolts 320 at a specified distance from the opposing bolts 320 so as to come into contact with the bolts 320. The bumpers 77 are made of rubber so that they can be elastically deformed by a smaller load than the resin pump cover 76. Accordingly, for example, even if the pump cover 76 is deflected downward by an impact on the pump cover 76, the bumpers 77 come into contact with the bolts 320 to thereby absorb the impact effectively. That is, the bumpers 77 can reduce the impact on the periphery of the relatively low-rigidity pump-insertion opening 45a of the upper surface 44 of the fuel tank 40. The bumpers 77 may be in contact with the opposing bolts 320 even if no impact is applied to the pump cover 76.

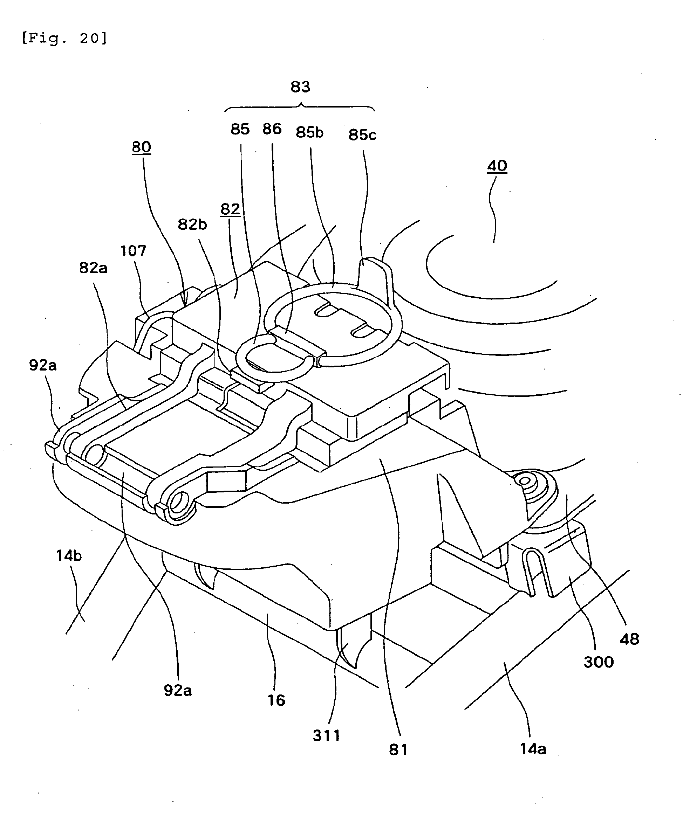

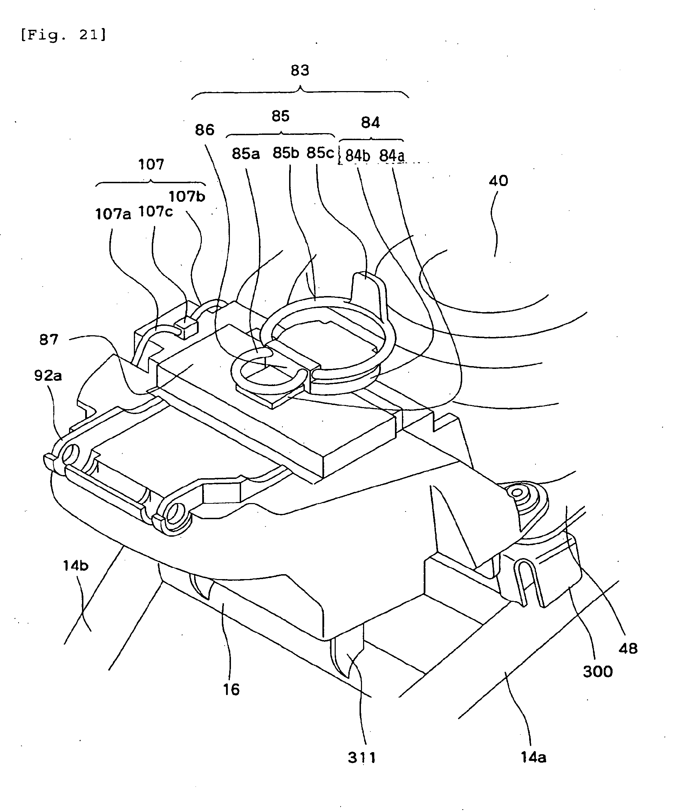

The battery case 80 will then be described in detail. Fig. 20 is a perspective view of the battery case 80; and Fig. 21 is a perspective view of the battery case 80 without an upper cover 82 of the battery case 80 of Fig. 20.

The battery case 80 includes a top-open casing 81 for accommodating the battery 87, the upper cover 82 disposed on the top of the casing 81, and a fixing section for fixing the upper cover 82 to the casing 81.

The battery case 80 is fixed to part of the body frame 10 in front of and close to the fuel tank 40. Specifically, the part of the pair of left and right seat rails 14a and 14b which extends forward of the fuel tank 40 has a cross member 16 which is part of the body frame 10 and extends in the width direction so as to connect the left and right seat rails 14a and 14b. On the cross member 16, a front-end support member 311 is fixed for supporting the battery case 80 (see Fig. 4). The casing 81 is fixed on the front-end support member 311, so that the battery case 80 is fixed to the cross member 16 through the front-end support member 311. The casing 81 has a plate-like rear projection 81 a projecting to the rear (see Figs. 2 and 3).

A front end part 82a of the upper cover 82 pivots on a hinge 92a of the front support section 92. Specifically, the upper cover 82 can be opened or closed by the rotation of the front end part 82a about a hinge shaft 92b (see Fig. 2) of the hinge 92a. The upper cover 82 has a plate-like front projection 82b projecting to the front.

Referring to Fig. 21, the fixing section 83 includes a plate-like mount 84 disposed underneath the upper cover 82, a ring-shaped band 85 one top of the upper cover 82, and a through portion 86 passing through the center of the upper cover 82 vertically. The whole fixing section 83 is made of rubber, in which the mount 84, the band 85, and the through portion 86 are integrally formed.

The mount 84 includes a front mount 84a extending from the lower end of the through portion 86 toward the front and a rear mount 84b extending from the lower end of the through portion 86 toward the rear, and is disposed between the lower surface of the upper cover 82 and the battery 87 in the casing 81. The front mount 84a and the rear mount 84b have different heights; the front mount 84a is lower than the rear mount 84b. The upper surfaces of the front mount 84a and the rear mount 84b are in contact with the lower surface of the upper cover 82, and the lower surfaces are in contact with the upper surface of the battery 87 in the casing 81. The front mount 84a and the rear mount 84b press down the battery 87 in the casing 81, on the lower surface of the upper cover 82.

The band 85 includes a ring-shaped front band 85a extending from the upper end of the through portion 86 toward the front and a ring-shaped rear band 85b extending from the upper end of the through portion 86 toward the rear. The ring-shaped front band 85a and the ring-shaped rear band 85b have different diameters of the ring; the diameter of the ring-shaped front band 85a is smaller than that of the ring-shaped rear band 85b. At the rear end of the ring-shaped rear band 85b is provided a plate-like tab 85c extending upward.

The front band 85a is engaged with the front projection 82b of the upper cover 82 (see Fig. 2). Specifically, the end of the ring-shaped front band 85a can be brought into engagement with the front projection 82b of the upper cover 82 by drawing the front band 85a to the front. The fixing section 83 is thus fixed to the upper cover 82. The rear band 85b is engaged with a plate-like rear projection 81 a projecting from the rear of the casing 81 (see Fig. 2). Specifically, the end of the ring-shaped rear band 85b can be brought into engagement with the rear projection 81 a of the casing 81 by drawing the rear band 85b to the rear with the tab 85c. Thus the upper cover 82 is fixed to the casing 81 by the fixing section 83.

The motorcycle 1 has a service terminal 107 disposed under the seat 20, which is exposed upward with the seat 20 opened upward. The service terminal 107 is disposed on the right in the width direction of the upper cover 82 of the battery case 80, for use in checking electronic equipment such as a speed meter (not shown) of the motorcycle 1. The end of a positive harness 107a of the service terminal 107 and the end of a negative harness 107b are detachably joined together through a terminal cap 107c.

The present straddle-type vehicle is not limited to the foregoing embodiment. The inclined part 42 of the fuel tank 40 is not necessarily inclined while curving in the front-back direction; for example, when disposed forward of the rotation shaft 3a of the rear wheel 3, the inclined part 42 may be inclined to the lower front in a line. Also, for example, the extending part 43 of the fuel tank 40 may further extend from the lower end of the inclined part 42 downward into the lowest position of the bottom 41. For example, the extending part 43 of the fuel tank 40 may curve in the width direction or the front-back direction. Also, for example, the bottom 41 of the fuel tank 40 may not have the extending part 43, in which case, the intake section 53 of the fuel pump unit 50 may be disposed in the lowest part of the bottom 41 of the fuel tank 40. That is, the intake section 53 is disposed close on the lowest part of the inclined part 42.

The number and shape of the front load receiving section 90 and the rear load receiving section 91 are not limited to those shown in the embodiment. For example, when at least one of the front load receiving section 90 and the rear load receiving section 91 has at least two partial load receiving sections disposed apart from each other in the width direction, only the rear load receiving section 91 may have the partial load receiving sections or both of the front load receiving section 90 and the rear load receiving section 91 may have the partial load receiving sections. In this case, the partial load receiving sections may not necessarily be disposed side by side in the width direction but may be disposed in different positions in the front-back direction.

For example, one front load receiving section 90 and one rear load receiving section 91 may be disposed. In this case, the front load receiving section 90 and the rear load receiving section 91 may not necessarily be disposed in the center in the width direction, but may be disposed either of the right and left side in the width direction.

For example, the front load receiving section 90 and the rear load receiving section 91 may project from either the seat 20 or the fuel tank 40. In other words, the front load receiving section 90 and the rear load receiving section 91 may be either integrated with the tank cover 60, the fuel tank 40, and the seat 20 or may be separated therefrom. The front load receiving section 90 and the rear load receiving section 91 are not necessarily shaped in a square pillar but may be shaped in a column or another polygonal pillar.

The front load receiving section 90 or the rear load receiving section 91 may have a hinge that pivotally supports the seat 20 or another component. That is, for example, the front load receiving section 90 may have a hinge disposed at the front of the fuel tank 40, for pivotally supporting the front end of the seat 20. In this case, the front load receiving section 90 is not necessarily disposed on the upper surface 44 of the fuel tank 40 facing the seat 20, but may project from part of the surface of the fuel tank 40.

The front load receiving section 90 and the rear load receiving section 91 are not necessarily made of rubber. For example, the front load receiving section 90 and the rear load receiving section 91 may be made of a material elastically deformable when pressed by the seat 20 deformed by a load to absorb the impact on the seat 20. Specifically, for example, when the front load receiving section 90 has a hinge that pivotally supports the front end of the seat 20, the front load receiving section 90 may be made of metal integrated with or separate from the fuel tank 40.

The base 71 of the protective member 70 is not limited to that of the foregoing embodiment provided that it is fixed to the body frame 10 and can disperse an impact on the pump cover 76. In other words, the base 71 is not particularly limited provided that it is fixed to part of the body frame 10, and is adjacent to, or in front of or behind the fuel tank 40. Specifically, the base 71 can be a three-dimensional member such as the battery case 80, the rear fender 4, or the body cover 100.

The base 71 is not necessarily fixed to the seat rails 14 of the body frame; for example, the base 71 may be another part of the body frame 10, which is fixed to and across the right frame and the left frame arranged side by side in the width direction. In this case, for example, the base 71 is wider than the pump cover 76 in the width direction, and both ends of which in the width direction are fixed to part of the pair of right and left body frames. The protective member 70 is not necessarily made of resin but may be made of metal that can disperse an impact on the pump cover 76.

The fixing section 83 of the battery case 80 is not necessarily made of rubber but may be made of another reversibly elastic material. The service terminal 107 is not necessarily disposed adjacent to the battery case 80; for example, it may be disposed under the seat 20 so as to be exposed for use when the seat 20 is opened.

The description above discloses (amongst others), in order to solve the problems, an embodiment of a straddle-type vehicle which includes a seat for riders, at least part of the seat being disposed
above a rear wheel; a fuel tank for keeping a fuel therein having a bottom including a part inclined in the front-back direction of the vehicle above the rear wheel and below the seat; and a fuel pump unit for supplying the fuel in the fuel tank to an engine, the fuel pump unit having a body extending on and along the inclined part of the bottom in the fuel tank.

This embodiment can provide a straddle-type vehicle having a fuel-tank assembly that can be disposed in the limited space between the rear wheel and the seat without impairment of the comfortable ride of the straddle-type vehicle. Specifically, for example, this embodiment can reduce the height of the fuel tank, thus providing sufficient thickness of the seat and suspension stroke of the rear wheel while limiting the height of the straddle-type vehicle from the supporting surface of the rear wheel to the top face of the seat to a specified threshold or below. The straddle-type vehicle according to this embodiment includes, for example, a motorcycle (including an electric motor bicycle), a four-wheeled buggy, and a snowmobile.

According to a preferred aspect, the inclined part of the bottom may be disposed above the front of the rear wheel with respect to the rotation shaft thereof, and inclined to the lower front. For example, this embodiment enables the center of gravity of the fuel in the fuel tank to be close to the center of gravity of the vehicle body in the front-back direction, thus improving the comfortable ride during the driving of the straddle-type vehicle.

Further, according to a preferred aspect, the fuel pump unit may further include a discharge section disposed on the fuel tank and discharging the fuel in the fuel tank to the outside of the fuel tank, the discharge section being located at the upper part of the vehicle and at the upper end of the body and being connected to the upper end of the body. This embodiment enables the discharge section to be disposed behind the seat for the driver, thus providing a driver seat with a sufficient thickness.

Further, according to a preferred aspect, the seat may be disposed on a first load receiving section and a second load receiving section disposed apart from each other in the front-back direction to receive a load on the seat; and the discharge section may be disposed between the first load receiving section and the second load receiving section. For example, this embodiment can provide a seat with a sufficient thickness while protecting the discharge section from the deflection of the seat due to a load.

Further, according to a preferred aspect, the seat may include a first seat portion for a first rider and a second seat portion for a second rider on the back of the first rider; and the discharge section may be disposed between the first seat portion and the second seat portion. According to this embodiment, for example, since the discharge section is disposed below neither of the first seat portion or the second seat portion, a sufficient thickness can be assured for the first seat portion and the second seat portion.

Further, according to a preferred aspect, the seat may be disposed on a first load receiving section disposed under the first seat portion to receive a load on the first seat portion and a second load receiving section disposed under the second seat portion to receive a load on the second seat portion; and the discharge section may be disposed between the first load receiving section and the second load receiving section. This embodiment can provide the first seat portion and the second seat portion with a sufficient thickness while effectively protecting the discharge section from the deflection of the first seat portion and the second seat portion due to a load.

Further, according to a preferred aspect, at least part of the inclined part of the bottom may be shaped like a saddle that straddles the rear wheel in the width direction. For example, this embodiment enables the fuel tank to be disposed close to the rear wheel, thus providing sufficient seat thickness and suspension stroke of the rear wheel.

Further, according to a preferred aspect, the bottom may further include an extending part extending in a curve from the lower end of the inclined part into the lowest position of the bottom; and the fuel pump unit may include an intake section connected to the body and sucking the fuel, at least part of the intake section being disposed on the extending part. For example, this embodiment can provide a sufficient capacity of tank.

The description further discloses an embodiment, which is not of the invention, of a fuel-tank assembly which includes: a fuel tank mounted to a straddle-type vehicle including a seat at least part of which is disposed above a rear wheel, the fuel tank for keeping a fuel therein and having a bottom including a part inclined in the front-back direction of the vehicle above the rear wheel and below the seat; and a fuel pump unit for supplying the fuel in the fuel tank to an engine, the fuel pump unit having a body extending on and along the inclined part of the bottom in the fuel tank. This embodiment can provide a fuel-tank assembly that can be disposed in the limited space between the rear wheel and the seat without impairment of the comfortable ride of the straddle-type vehicle.

Thus, according to a first aspect, there is disclosed a straddle-type vehicle comprising: a seat for riders, at least part of the seat being disposed above a rear wheel; a fuel tank for keeping a fuel therein and having a bottom including a part inclined in the front-back direction of the vehicle above the rear wheel and below the seat; and a fuel pump unit for supplying the fuel in the fuel tank to an engine, the fuel pump unit having a body extending on and along the inclined part of the bottom in the fuel tank.

Further, according to a preferred second aspect, the inclined part of the bottom is disposed above the front of the rear wheel with respect to the rotation shaft thereof, and is inclined to the lower front.

Further, according to a preferred third aspect, the fuel pump unit further comprises a discharge section disposed on the fuel tank and discharging the fuel in the fuel tank to the outside of the fuel tank, the discharge section being located at the upper part of the vehicle and at the upper end of the body and being connected to the upper end of the body.

Further, according to a preferred fourth aspect, the seat is disposed on a first load receiving section and a second load receiving section disposed apart from each other in the front-back direction to receive a load on the seat; and the discharge section is disposed between the first load receiving section and the second load receiving section.

Further, according to a preferred fifth aspect, the seat includes a first seat portion for a first rider and a second seat portion for a second rider on the back of the first rider; and the discharge section is disposed between the first seat portion and the second seat portion.

Further, according to a preferred sixth aspect, the seat is disposed on a first load receiving section disposed under the first seat portion to receive a load on the first seat portion and a second load receiving section disposed under the second seat portion to receive a load on the second seat portion; and the discharge section is disposed between the first load receiving section and the second load receiving section.

Further, according to a preferred seventh aspect, at least part of the inclined part of the bottom is shaped like a saddle that straddles the rear wheel in the width direction.

Further, according to a preferred eighth aspect, the bottom further includes an extending part extending in a curve from the lower end of the inclined part into the lowest position of the bottom; and the fuel pump unit includes an intake section connected to the body and sucking the fuel, at least part of the intake section being disposed on the extending part.

The description discloses further a preferred ninth aspect, which is an embodiment of a fuel-tank assembly comprising: a fuel tank for keeping a fuel therein and mounted to a straddle-type vehicle including a seat at least part of which is disposed above a rear wheel, the fuel tank having a bottom including a part inclined in the front-back direction of the vehicle above the rear wheel and below the seat; and a fuel pump unit for supplying the fuel in the fuel tank to an engine, the fuel pump unit having a body extending on and along the inclined part of the bottom in the fuel tank.

The description further discloses a preferred tenth aspect, which is an embodiment of a straddle-type vehicle comprising: a fuel tank for keeping a fuel therein having a bottom including a part inclined in the front-back direction of the vehicle; and a fuel pump unit for supplying the fuel in the fuel tank to an engine, the fuel pump unit having a body extending on and along the inclined part of the bottom in the fuel tank.

Likewise, according to a particularly preferred embodiment, there is disclosed, in order to provide a fuel-tank assembly that can be disposed in the space between the rear wheel and the seat without impairment of the comfortable ride of a straddle-type vehicle, and a straddle-type vehicle including the fuel-tank assembly, an embodiment of a straddle-type vehicle including: a seat for riders, at least part of the seat being disposed above a rear wheel; a fuel tank for storing a fuel therein and having a bottom including a part inclined in the front-back direction of the vehicle above the rear wheel and below the seat; and a fuel pump unit for supplying the fuel in the fuel tank to an engine, the fuel pump unit having a body extending on and along the inclined part of the bottom in the fuel tank.

## Claims

1. Straddle-type vehicle (1) with a fuel-tank assembly, comprising:
a fuel tank (40) for keeping a fuel therein having a bottom (41) including an inclined part (42) inclined in the front-back direction of the vehicle (1);
a seat (20), wherein at least part of the seat (20) is disposed above a rear wheel (3);
wherein the fuel tank (40) having the bottom (41) including the inclined part (42) inclined in the front-back direction of the vehicle (1) is provided above the rear wheel (3) and below the seat (20); and
a fuel pump unit (50) for supplying the fuel in the fuel tank to an engine, the fuel pump unit (50) having a body (51),
**characterized in that**
the body (51) of the fuel pump unit (50) extends on and substantially along the inclined part (42) of the bottom (41) in the fuel tank (40) for supplying the fuel in the fuel tank (40) to the engine.

2. Straddle-type vehicle according to claim 1, **characterized in that** the body (51) of the fuel pump unit (50) is provided for generating power for taking out the fuel stored inside the fuel tank (40).

3. Straddle-type vehicle according to claim 1 or 2, **characterized in that** the fuel pump unit (50) further includes a discharge section (52) for discharging fuel to the outside of the fuel tank (40), the discharge section being located at the upper part of the vehicle and at the upper end of the body and being connected to the upper end of the body.

4. Straddle-type vehicle according to one of the claims 1 to 3, **characterized in that** the inclined part (42) of the bottom (41) is disposed above the front of the rear wheel (3) with respect to a rotation shaft (3a) thereof, and is inclined to the lower front.

5. Straddle-type vehicle according to one of the claims 1 to 4, **characterized in that** the seat (20) is disposed on a first load receiving section (90) and a second load receiving section (91) disposed apart from each other in the front-back direction to receive a load on the seat (20).

6. Straddle-type vehicle according to claim 5, **characterized in that** the discharge section (52) is disposed between the first load receiving section (90) and the second load receiving section (91).

7. Straddle-type vehicle according to one of the claims 2 to 6, **characterized in that** the seat (20) includes a first seat portion (21) for a first rider and a second seat portion (22) for a second rider on the back of the first rider, and wherein the discharge section is disposed between the first seat portion (21) and the second seat portion (22).

8. Straddle-type vehicle according to claim 7, **characterized in that** the first load receiving section (90) is disposed under the first seat portion (21) to receive a load on the first seat portion (21) and the second load receiving section (91) disposed under the second seat portion (22) to receive a load on the second seat portion (22), and
wherein the discharge section (52) is disposed between the first load receiving section (90) and the second load receiving section (91).

9. Straddle-type vehicle according to one of the claims 1 to 8, **characterized in that** at least part of the inclined part (42) of the bottom (41) is shaped like a saddle that straddles the rear wheel (3) in the width direction.

10. Straddle-type vehicle according to one of the claims 1 to 9, **characterized in that** the bottom (41) further includes an extending part (43) extending in a curve from the lower end of the inclined part (42) into the lowest position of the bottom (41), and wherein the fuel pump unit (50) includes an intake section (53) connected to the body (51) and adapted to suck the fuel, at least part of the intake section (53) being disposed on the extending part (43).

## Patentansprüche

1. Fahrzeug (1) vom Spreizsitz- Typ mit einer Kraftstofftankanordnung, aufweisend:
einen Kraftstofftank (40), um darin einen Kraftstoff aufzubewahren (41), der einen Boden (41) hat, der einen geneigten Teil (42), geneigt in der Vorwärts- Rückwärts- Richtung des Fahrzeuges (1), enthält;
einen Sitz (20), wobei zumindest ein Teil des Sitzes (20) oberhalb des Hinterrades (3) angeordnet ist;
wobei der Kraftstofftank (40), der den Boden (41) hat, der den geneigten Teil (42), geneigt in der Vorwärts- Rückwärts- Richtung des Fahrzeuges (1), enthält, oberhalb des Hinterrades (3) und unter dem Sitz (20) angeordnet ist; und
eine Kraftstoffpumpeneinheit (50) zum Zuführen des Kraftstoffes in dem Kraftstofftank zu einer Brennkraftmaschine, wobei die Kraftstoffpumpeneinheit (50) einen Körper (51) hat,
**dadurch gekennzeichnet, dass**
sich der Körper (51) der Kraftstoffpumpeneinheit (50) auf und im Wesentlichen entlang des geneigten Teils (42) des Bodens (41) in dem Kraftstofftank (40) erstreckt, um den Kraftstoff in dem Kraftstofftank (40) zu der Brennkraftmaschine zuzuführen.

2. Fahrzeug vom Spreizsitz- Typ nach Anspruch 1, **dadurch gekennzeichnet, dass** der Körper (51) der Kraftstoffpumpeneinheit (50) zum Erzeugen von Leistung vorgesehen ist, um den innerhalb des Kraftstofftanks (40) gespeicherten Kraftstoff zu entnehmen.

3. Fahrzeug vom Spreizsitz- Typ nach Anspruch 1 oder 2, **dadurch gekennzeichnet, dass** der Körper (51) der Kraftstoffpumpeneinheit (50) außerdem einen Abgabeabschnitt (52) enthält, um Kraftstoff nach außerhalb des Kraftstofftanks (40) abzugeben, wobei der Abgabeabschnitt an dem oberen Teil des Fahrzeuges und an dem oberen Ende des Körpers angeordnet ist und mit dem oberen Ende des Körpers verbunden ist.

4. Fahrzeug vom Spreizsitz- Typ nach einem der Ansprüche 1 bis 3, **dadurch gekennzeichnet, dass** der geneigte Teil (42) des Bodens (41) oberhalb der Vorderseite des Hinterrades (3) in Bezug auf seine Drehwelle (3a) angeordnet ist und zu der unteren Vorderseite geneigt ist.

5. Fahrzeug vom Spreizsitz- Typ nach einem der Ansprüche 1 bis 4, **dadurch gekennzeichnet, dass** der Sitz (20) auf einem ersten Lastaufnahmeabschnitt (90) angeordnet ist und ein zweiter Lastaufnahmeabschnitt (91) davon beabstandet in der Vorwärts- Rückwärts- Richtung angeordnet ist, um eine Last auf dem Sitz (20) aufzunehmen.

6. Fahrzeug vom Spreizsitz- Typ nach Anspruch 5, **dadurch gekennzeichnet, dass** der Abgabeabschnitt (52) zwischen dem ersten Lastaufnahmeabschnitt (90) und dem zweiten Lastaufnahmeabschnitt (91) angeordnet ist.

7. Fahrzeug vom Spreizsitz- Typ nach einem der Ansprüche 1 bis 4, **dadurch gekennzeichnet, dass** der Sitz (20) einen ersten Sitzabschnitt (21) für einen ersten Fahrer und einen zweiten Sitzabschnitt (22) für einen zweiten Fahrer hinter dem ersten Fahrers enthält, und wobei der Abgabeabschnitt zwischen dem ersten Sitzabschnitt (21) und dem zweiten Sitzabschnitt (22) angeordnet ist.

8. Fahrzeug vom Spreizsitz- Typ nach Anspruch 7, **dadurch gekennzeichnet, dass** der erste Lastaufnahmeabschnitt (90) unter dem ersten Sitzabschnitt (21) angeordnet ist, um eine Last auf den ersten Sitzabschnitt (21) aufzunehmen, und der zweite Lastaufnahmeabschnitt (91) unter dem zweiten Sitzabschnitt (22) angeordnet ist, um eine Last auf dem zweiten Sitzabschnitt (22) aufzunehmen, und
wobei der Abgabeabschnitt (52) zwischen dem ersten Lastaufnahmeabschnitt (90) und dem zweiten Lastaufnahmeabschnitt (91) angeordnet ist.

9. Fahrzeug vom Spreizsitz- Typ nach einem der Ansprüche 1 bis 8, **dadurch gekennzeichnet, dass** zumindest ein Teil des geneigten Teils (42) des Bodens (41) wie ein Sattel geformt ist, der das Hinterrad (3) in Richtung der Breite überspannt.

10. Fahrzeug vom Spreizsitz- Typ nach einem der Ansprüche 1 bis 9, **dadurch gekennzeichnet, dass** der Boden (41) außerdem einen sich erstreckenden Teil (43) enthält, der sich in einer Krümmung von dem unteren Ende des geneigten Teils (42) in die unterste Position des Bodens (41) erstreckt und wobei die Kraftstoffpumpeneinheit (50) einen Einlassabschnitt (53) enthält, verbunden mit dem Körper (51) und vorgesehen, den Kraftstoff anzusaugen, wobei zumindest ein Teil des Einlassabschnittes (53) an dem sich erstreckenden Teil (43) angeordnet ist.

## Revendications

1. Véhicule de type monté à califourchon (1) avec un assemblage de réservoir de carburant, comprenant :
un réservoir de carburant (40) pour contenir un carburant à l'intérieur de celui-ci ayant un fond (41) comprenant une partie inclinée (42) inclinée dans la direction de l'avant vers l'arrière du véhicule (1) ;
un siège (20), dans lequel au moins une partie du siège (20) est disposée au-dessus d'une roue arrière (3) ;
dans lequel le réservoir de carburant (40) ayant le fond (41) comprenant la partie inclinée (42) inclinée dans la direction de l'avant vers l'arrière du véhicule (1) est disposé au-dessus de la roue arrière (3) et au-dessous du siège (20) ; et
une unité de pompe à carburant (50) pour fournir le carburant dans le réservoir de carburant à un moteur, l'unité de pompe à carburant (50) ayant un corps (51),
**caractérisé en ce que**
le corps (51) de l'unité de pompe à carburant (50) s'étend sur et sensiblement le long de la partie inclinée (42) du fond (41) dans le réservoir de carburant (40) pour fournir le carburant dans le réservoir de carburant (40) au moteur.

2. Véhicule de type monté à califourchon selon la revendication 1, **caractérisé en ce que** le corps (51) de l'unité de pompe à carburant (50) est fourni pour générer de la puissance pour prendre du carburant stocké à l'intérieur du réservoir de carburant (40).

3. Véhicule de type monté à califourchon selon la revendication 1 ou 2, **caractérisé en ce que** l'unité de pompe à carburant (50) comprend en outre une section de refoulement (52) pour refouler le carburant à l'extérieur du réservoir de carburant (40), la section de refoulement étant située au niveau de la partie supérieure du véhicule et à l'extrémité supérieure du corps et étant connectée à l'extrémité supérieure du corps.

4. Véhicule de type monté à califourchon selon l'une des revendications 1 à 3, **caractérisé en ce que** la partie inclinée (42) du fond (41) est disposée au-dessus de l'avant de la roue arrière (3) par rapport à un arbre de rotation (3a) de celle-ci, et est inclinée vers le bas de l'avant de la roue arrière.

5. Véhicule de type monté à califourchon selon l'une des revendications 1 à 4, **caractérisé en ce que** le siège (20) est disposé sur une première section de réception de charge (90) et une deuxième section de réception de charge (91) disposées à l'écart l'une de l'autre dans la direction de l'avant vers l'arrière pour recevoir une charge sur le siège (20).

6. Véhicule de type monté à califourchon selon la revendication 5, **caractérisé en ce que** la section de décharge (52) est disposée entre la première section de réception de charge (90) et la deuxième section de réception de charge (91).

7. Véhicule de type monté à califourchon selon l'une des revendications 2 à 6, **caractérisé en ce que** le siège (20) comprend une première portion de siège (21) pour un premier passager et une deuxième portion de siège (22) pour un deuxième passager derrière le premier passager, et dans lequel la section de décharge est disposée entre la première portion de siège (21) et la deuxième portion de siège (22).

8. Véhicule de type monté à califourchon selon la revendication 7, **caractérisé en ce que** la première section de réception de charge (90) est disposée sous la première portion de siège (21) pour recevoir une charge sur la première portion de siège (21) et la deuxième section de réception de charge (91) est disposée sous la deuxième portion de siège (22) pour recevoir une charge sur la deuxième portion de siège (22), et dans lequel la section de décharge (52) est disposée entre la première section de réception de charge (90) et la deuxième section de réception de charge (91).

9. Véhicule de type monté à califourchon selon l'une des revendications 1 à 8, **caractérisé en ce qu'**au moins une partie de la partie inclinée (42) du fond (41) est en forme de selle montée à califourchon sur la roue arrière (3) dans la direction de la largeur.

10. Véhicule de type monté à califourchon selon l'une des revendications 1 à 9, **caractérisé en ce que** le fond (41) comprend en outre une partie d'extension (43) s'étendant en courbe de l'extrémité inférieure de la partie inclinée (42) à la position la plus basse du fond (41), et dans lequel l'unité de pompe à carburant (50) comprend une section d'admission (53) connectée au corps (51) et apte à aspirer le carburant, au moins une partie de la section d'admission (53) étant disposée sur la partie d'extension (43).
